(19) **Europäisches Patentamt / European Patent Office / Office européen des brevets**

(11) **EP 3 056 767 A1**

(12) # EUROPÄISCHE PATENTANMELDUNG

(43) Veröffentlichungstag:
**17.08.2016  Patentblatt 2016/33**

(51) Int Cl.:
**F16H 57/021** *(2012.01)*   **F16H 57/022** *(2012.01)*

(21) Anmeldenummer: **15154984.7**

(22) Anmeldetag: **13.02.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **IMS Gear GmbH**
**78166 Donaueschingen (DE)**

(72) Erfinder:
• **Oberle, Stephan**
  **78050 Villingen-Schwenningen (DE)**
• **Mauerlechner, Gregor**
  **78652 Deisslingen (DE)**

(74) Vertreter: **Westphal, Mussgnug & Partner**
**Patentanwälte mbB**
**Am Riettor 5**
**78048 Villingen-Schwenningen (DE)**

(54) **Kunststoffelement zur spielfreien Lagerung**

(57)    Die Erfindung beschreibt ein Schneckengetriebe mit einem Schneckenrad, das drehfest auf einer um eine Lenkachse drehbaren Lenkwelle angeordnet ist, eine um eine Drehachse drehbar gelagerte Schneckenwelle, die ein motorseitiges und ein motorfernes Ende, sowie eine Schneckenverzahnung aufweist, welche zwischen die Zähne des Schneckenrads so eingreift, dass, wenn die Schneckenwelle sich um die Drehachse dreht, das Schneckenrad und die Lenkwelle sich um die Lenkachse drehen, ein Getriebegehäuse, in welchem das Schneckenrad und die Schneckenwelle drehbar gelagert aufgenommen sind sowie ein Ausgleichselement, wobei das Ausgleichselement einen Mittelabschnitt sowie einen hinteren und einen vorderen Endabschnitt aufweist, wobei der hintere Endabschnitt mit dem Getriebegehäuse verbunden ist und der vordere Endabschnitt das motorferne Ende der Schneckenwelle oder eine das motorferne Ende der Schneckenwelle aufnehmende Halterung haltert.

Fig. 1

**Beschreibung**

Die vorliegende Erfindung betrifft eine Vorrichtung, insbesondere eine Vorrichtung zum Andrücken einer Schnecke oder eines Schraubritzels an ein Schneckenrad oder ein Schraubrad nach dem Oberbegriff des Patentanspruchs 1. Eine derartige Vorrichtung findet beispielsweise bei der Herstellung einer elektromechanischen Servolenkung Anwendung.

Schneckengetriebe, die beispielsweise bei elektromechanischen Servolenkungen verwendet werden, beispielsweise bei EPS-Systemen (Electric Power Steering) oder bei EPAS-Systemen (Electric Power Assisted Steering), müssen bei kleinen Momenten spielfrei angeordnet werden. Bei Temperatur- und Feuchtigkeitsänderungen ändert sich das Spiel positiv oder negativ, wodurch es Geräusche (positives Spiel) oder Schwergängigkeit (negatives Spiel) bei der Lenkung geben kann. Dies liegt daran, dass sich die für das Getriebe verwendeten unterschiedlichen Materialien unterschiedlich ausdehnen, wodurch beispielsweise eine bei der einen Temperatur fest in das Schneckenrad eingreifende Schneckenwelle bei einer anderen Temperatur nur lose in das Schneckenrad eingreift oder zu fest gegen das Schneckenrad drückt.

Bei den bisherigen Getrieben für die elektromechanische Servolenkung wird ein Aluminiumgehäuse mit einer Stahlschnecke verwendet. Das Schneckenrad besteht dabei aus einer Metallnabe und einem dünnen Kunststoffzahnkranz. Die Durchmesser der Metallnabe und des Zahnkranzes wurden bei diesen Ausführungen so gewählt, dass der thermische, radiale Längenausdehnungskoeffizient von Stahlnabe, Zahnkranz und Schnecke in der Summe den des Aluminiumgehäuses in etwa entspricht. Um diese Bedingung zu lösen, sind daher oft eine sehr große Metallnabe und ein sehr dünner Kunststoffzahnkranz zu wählen, was ein teures und schweres Bauteil zur Folge hat.

Alternative Lösungen sehen vor, dass auch die Schnecke mittels einer aufwändigen Konstruktion gegen das Schneckenrad angefedert wird. Hier sind in der Regel allerdings die Federwege limitiert, sodass auch hier das Schneckenrad keine zu große Durchmesserveränderung über Temperatur und Luftfeuchtigkeit erfahren darf.

Die EP 2 694 355 A1 offenbart zur Lösung des Problems eine elektromechanische Servolenkung mit einem elektrischen Servomotor, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind. Das Spiel zwischen Schneckenwelle und Schneckenrad wird dadurch begrenzt, dass die Schneckenwelle ein freies motorfernes Ende aufweist, das in einem Wälzlager mit einem Innenring, Wälzkörpern und einem Zwischenring gelagert ist, wobei der Zwischenring eine innere Lauffläche für die Wälzkörper und eine äußere Lauffläche für äußere Wälzkörper aufweist, und wobei die innere Lauffläche und die äußere Lauffläche des Zwischenringes exzentrisch zueinander angeordnet sind. Um einen einigermaßen gleichmäßigen Druck und Eingriff der Schneckenwelle in die Zähne des Schneckenrades zu gewährleisten, ist in einer Ausführungsform dieser Lösung das exzentrische Drehlager mit Federn vorgespannt am Getriebegehäuse befestigt. Wenn sich nun das Schneckenrad durch thermische Schwankungen oder durch Feuchtigkeitsschwankungen ausdehnt, folgt das exzentrische äußere Wälzlager dieser Ausdehnung, sodass die im inneren zentrischen Lager sich drehende Schneckenwelle dieser Ausdehnungsbewegung des Zahnrades folgt und mit im Wesentlichen dem gleichen Druck auf dem Zahnrad weiterkämmt. Eine derartige Lösung ist nicht nur sehr aufwändig, sondern auch sehr kostenintensiv.

Aufgabe der vorliegenden Erfindung ist es daher, eine einfachere, preisgünstigere Lösung bereitzustellen, die ein ausreichendes Ausweichen oder Nachgeben der Schneckenwelle gewährleistet, wenn das Schneckenrad durch Temperaturänderungen oder Änderungen der Feuchtigkeit seinen Außendurchmesser ändert.

Diese Aufgabe wird gelöst durch eine Vorrichtung nach Patentanspruch 1. Vorteilhafte Ausführungsformen sind in den Unteransprüchen offenbart.

Die erfinderische Vorrichtung weist ein Schneckenrad auf, welches nach außen weisende Zähne aufweist und drehbar um eine Lenkachse angeordnet ist, wobei es drehfest auf einer um die Lenkachse drehbaren Lenkwelle angeordnet, bzw. befestigt werden kann, bzw. drehfest mit der Lenkwelle verbindbar ist. Die Vorrichtung weist weiterhin eine um eine Drehachse drehbar gelagerte Schneckenwelle auf, die ein motorseitiges und ein motorfernes Ende aufweist, sowie eine Schneckenverzahnung, welche zwischen die Zähne des Schneckenrades so eingreift, dass, wenn die Schneckenwelle sich um die Drehachse dreht, das Schneckenrad sich um die Lenkachse dreht. Weiterhin weist die Vorrichtung ein Getriebegehäuse auf, in welchem das Schneckenrad um die Schneckenwelle drehbar gelagert aufgenommen ist, sowie ein Ausgleichselement.

Das Schneckenrad kann aus einem Material oder aus einem Materialgemisch zusammengesetzt sein. Es weist beispielsweise eine Metallnabe aus z.B. Stahl und einen Kunststoffring, der auch als Zahnkranz bezeichnet wird, auf. Es kann auch noch zusätzlich ein Radträgermaterial, das hier auch als Radkörper oder auch als Radelement bezeichnet wird, aufweisen. Das Radelement ist dann beispielsweise auf der Metallnabe angeordnet und trägt den Zahnkranz. Radelement und Zahnkranz können aus unterschiedlichen Materialien bestehen. In dieser Offenbarung soll das Material, aus dem das Schneckenrad besteht, wenn es einstückig ausgebildet ist oder die Materialien, aus denen das Schneckenrad besteht, wenn es mehrstückig ausgebildet ist, als Schneckenradmaterial bezeichnet werden.

Erfindungsgemäß hat das Ausgleichselement einen Mittelabschnitt sowie einen hinteren Endabschnitt und einen vorderen Endabschnitt. Der hintere Endabschnitt ist dabei mit dem Getriebegehäuse verbunden, der vordere Endabschnitt haltert entweder das motorferne Ende der Schneckenwelle oder er haltert eine das motorferne Ende der Schneckenwelle aufnehmende Halterung.

Die Halterung kann beispielsweise ein um das motorferne Ende der Schneckenwelle angeordnetes, vorzugsweise als Wälzlager ausgebildetes Loslager sein, in welchem die Schneckenwelle drehbar gehaltert aufgenommen ist.

Das Ausgleichselement ist vorteilhafterweise einstückig ausgebildet, wobei der Mittelabschnitt zwischen dem vorderen und hinteren Endabschnitt ausgebildet ist.

Das Ausgleichselement ist vorzugsweise aus einem Material gebildet, dessen Ausdehnungsänderung ähnlich der Ausdehnungsänderung des Radius des Schneckenrads ist. Die Ausdehnungsänderung des Materials aus dem das Ausgleichselement ist, weicht vorzugsweise um nicht mehr als 20 bis 40% von der Ausdehnungsänderung des Schneckenrads ab. Das Ausgleichselement selbst zeigt dann, bei geeigneten Abmessungen ähnliche thermische Ausdehnungsbewegungen wie das Schneckenrad. So kann beispielsweise der Radkörper aus glasfaserverstärktem Polyamid, beispielsweise aus PA66 sein, der Zahnkranz aus reinem Polyamid, beispielsweise PA66. Das Ausgleichselement kann beispielsweise aus glasfaserverstärktem Material, beispielsweise Polyamid mit einem Glasfaseranteil von 50 bis 60% bestehen.

Vorteilhafterweise hat das Material aus dem der Zahnkranz besteht, gleiche oder zumindest ähnliche Quelleigenschaften, wie das Material, aus welchem das Ausgleichselement besteht oder haben die Materialien aus denen der Zahnkranz und das Radelement des Schneckenrads bestehen im Mittel gleiche oder zumindest ähnliche Quelleigenschaften, wie das Material oder die Materialien, aus welchem oder welchen das Ausgleichselement besteht. Dies hat den Vorteil, dass eine mögliche Materialquellung durch Luftfeuchtigkeitsschwankungen sich so auswirkt, dass die Ausdehnung des Schneckenrads der Ausdehnung des Ausgleichselements in etwa folgen kann.

Das Schneckenrad kann aus glasfaserverstärktem Kunststoffmaterial ausgebildet sein, oder einen Zahnkranz aus glasfaserverstärktem Kunststoffmaterial aufweisen, oder ein Radelement aus glasfaserverstärktem Kunststoffmaterial aufweisen.

Das Schneckenrad kann auch eine große Stahlnabe aufweisen, beispielsweise eine Stahlnabe, deren Durchmesser gleich oder größer der halbe Durchmesser, beispielsweise größer als dreiviertel mal der Durchmesser des Schneckenrades ist, wobei der Zahnkranz ohne Glasfaserverstärkung ausgebildet sein kann.

Um nun zu erreichen, dass die absolute Längenänderung des Ausgleichselementes bei einer bestimmten Temperaturdifferenz gleich oder zumindest im Bereich der Längenänderung des Halbmessers des Schneckenrades plus der Längenänderung des Halbmessers der Schneckenwelle abzüglich der Längenänderung des Gehäuses ist, kann nun beispielsweise die Metallnabe einen relativ kleinen Durchmesser im Vergleich zum Gesamtdurchmesser des Schneckenrades aufweisen. Der überwiegende Teil des Schneckenraddurchmessers kann daher beispielsweise aus einem Kunststoffmaterial, oder aus mehreren Kunststoffmaterialien gebildet werden. Dadurch kann das Gewicht des Schneckenrades gegenüber einem Schneckenrad aus Vollmetall reduziert werden.

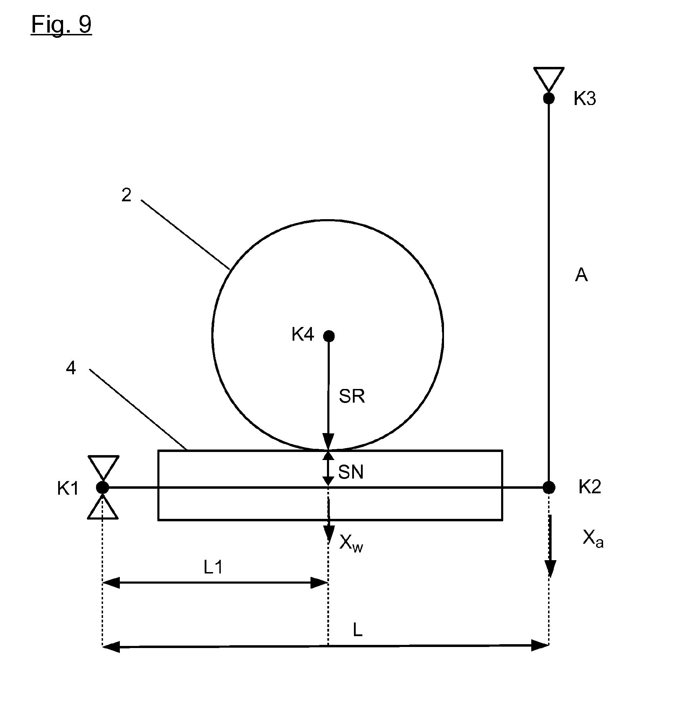

Die Länge, die das Ausgleichselement zwischen seinen Befestigungs- und Halterungspunkten aufweisen muss, damit seine Längenausdehnung in etwa der Änderung des Halbmessers des Schneckenrades entspricht, kann berechnet werden, wie folgendes, anhand Figur 9 erläutertes Rechenbeispiel zeigt:

Allgemein gilt:

$$\Delta L = L_0 * \alpha * \Delta T \quad (1)$$

wobei $\Delta L$ der Wert der Längenausdehnung des Ausgleichselementes ist. $L_0$ ist die Länge des Ausgleichselementes bei einer Referenztemperatur $T_0$, $\alpha$ ist der Längenausdehnungskoeffizient und $\Delta T$ ist die Temperaturänderung.

Figur 9 zeigt eine schematische Skizze eines Schneckengetriebes mit einem Schneckenrad 2, in das eine Schneckenwelle 4 kämmt. K1, K2, K3 und K4 definieren Lagerpunkte. Die Schneckenwelle 4 ist an den beiden Lagerpunkten K1 und K2 gelagert. Der Lagerpunkt K1 ist als Festlager, der Lagerpunkt K2 als Loslager ausgebildet. Die Lagerpunkte K1 und K3 sind Festlager, die an dem Gehäuse, welches das Schneckengetriebe aufnimmt, befestigt sind. Das Schneckenrad 2 ist an dem Lagerpunkt K4 gelagert, der den Mittelpunkt des Schneckenrads definiert. Das Ausgleichselement A ist an dem Festlagerpunkt K3 und dem Loslager K2 gelagert. L definiert den Abstand zwischen den beiden Lagerpunkten K1 und K2, L1 den Abstand zwischen dem Lagerpunkt K1 und der Projektion des Angriffspunktes des Schneckenrads 2 an der Schneckenwelle 4 auf die Achse K1-K2 der Schneckenwelle. SR ist der Halbmesser des Schneckenrads, $\alpha_{SR}$ der effektive Längenausdehnungskoeffizient des Schneckenrads, SN der Halbmesser der Schnecke, $\alpha_{SN}$ der effektive Längenausdehnungskoeffizient der Schnecke, A die Länge des Ausgleichselements, $\alpha_A$ der

effektive Längenausdehnungskoeffizient des Ausgleichselements, und $\alpha_G$ der effektive Längenausdehnungskoeffizient des Gehäuses. Für den Achsabstand G ergibt sich:

$$G = SR + SN \qquad (2)$$

Die Längendehnung des Gehäuses $\Delta G$ zwischen Schneckenradzentrum und Mittelachse der Schneckenwelle kann abweichen von der Längenänderung, die sich aus der Summe der Änderungen von Schneckenrad-Halbmesser $\Delta SR$ und Änderung des Schneckenhalbmessers $\Delta SN$ ergibt. Für die Auslenkung $X_w$ gilt:

$$X_w = \Delta SR + \Delta SN - \Delta G \quad (3)$$

Durch das Längenverhältnis $L_1/L$ ergibt sich die Auslenkung $X_a$ am Loslager K2 zu

$$X_a = X_w * L/L_1 \quad (4)$$

Das Ausgleichselement A soll am Lagerpunkt K2 dieselbe relative Auslenkung erfahren wie die Schnecke durch die Auslenkung bei $X_w$ und das Hebelverhältnis $L/L_1$ auf das Loslager K2 übertragen. Dies wird erreicht, indem die Länge und der Längenausdehnungskoeffizient (CLTE) vom Ausgleichselement so gewählt werden, dass das Ausgleichselement am Punkt K2 aufgrund Wärmeausdehnung genau um die Strecke $X_a$ sich gegenüber dem Gehäuse an dieser Stelle dehnt. Die Ausdehnung des Ausgleichselements abzüglich die Ausdehnung des Gehäuses zwischen K2 und K3 soll genau $X_a$ entsprechen, so dass:

$$X_a = A_0 * (\alpha_A - \alpha_G) * \Delta T \quad (5),$$

wobei Ao die zu wählende Länge des Ausgleichselements ist. Einsetzen von (4) in (5) liefert:

$$X_w * L/L_1 = A_0 * (\alpha_A - \alpha_G) * \Delta T.$$

Einsetzen von (3) in diese Gleichung ergibt:

$$(\Delta SR + \Delta SN - \Delta G) * L/L_1 = A_0 * (\alpha_A - \alpha_G) * \Delta T.$$

Einsetzen von (1) ergibt:

$$(SR_0 * \alpha_{SR} * \Delta T + SN_0 * \alpha_{SN} * \Delta T - G_0 * \alpha_G * \Delta T) * L/L_1 = A_0 * (\alpha_A - \alpha_G) * \Delta T,$$

woraus sich nach Einsetzen von Gleichung (2) und Auflösen nach Ao ergibt:

$$A_0 = L/L_1 * (SR_0(\alpha_{SR} - \alpha_G) + SN_0(\alpha_{SN} - \alpha_G))/(\alpha_A - \alpha_G).$$

Ao ist bei vorliegendem $\alpha_A$ als Länge des Ausgleichselements zu wählen.

Dieses Rechenbeispiel zeigt, dass die Länge des Ausgleichselementes bei vorgegebenen Geometrien des Schneckenrades und der Schneckenwelle eindeutig bestimmt werden kann. Wird daher der Achsabstand der Schneckenwelle zum Schneckenrad nicht über ein Aluminiumgehäuse, sondern über das Ausgleichselement, welches vorteilhafterweise aus Kunststoff besteht, bestimmt, kann bei geeigneter Dimensionierung und Werkstoffauswahl dieses Kunststoffelement sehr ähnliche Längenänderungen erfahren wie das Zusammenspiel von Schnecke und Schneckenrad. Das Ausgleichselement dehnt sich aufgrund der Umgebungstemperatur also gleich stark aus wie Schneckenrad und Schneckenwelle. Damit bleibt das Spiel, bzw. der Anpressdruck zwischen Schneckenwelle und Schneckenrad konstant.

Bei zusätzlicher Einwirkung von Feuchtigkeit kann ein Quellen des Durchmessers des Schneckenrades ebenso durch ein gleichzeitiges Quellen des Ausgleichselementes automatisch kompensiert werden, wenn der Werkstoff des Ausgleichelementes entsprechend gewählt wird. In der besonders bevorzugten Ausführungsform weist daher das Ausgleichselement das gleiche Material, also beispielsweise das gleiche Polymer auf, wie das Schneckenrad. Sofern das Schneckenrad einstückig ausgebildet ist, besteht es vorteilhafterweise aus diesem Material. Sofern das Schneckenrad einen Zahnkranz aufweist, der auf einer Nabe angeordnet ist, besteht der Zahnkranz vorteilhafterweise aus diesem Material. Weist das Schneckenrad Zahnkranz, Radelement und Nabe auf, wobei das Radelement zwischen der Nabe und dem Zahnkranz angeordnet ist, besteht das Radelement vorzugsweise aus diesem Material. Selbstverständlich können auch andere Teile des Schneckenrads, sofern dieses mehrteilig ausgebildet ist, aus dem gleichen Material bestehen, wie das Ausgleichselement.

Dieses Material ist vorzugsweise ein Polyamid, besonders vorzugsweise glasfaserverstärktes Polyamid. Glasfaserverstärktes Polyamid ist besonders robust und weist einen relativ geringen Verschleiß bei hoher Beanspruchbarkeit auf.

Die Länge des Ausgleichselementes richtet sich nach dem Ausdehnungskoeffizienten von Schneckenwelle, Schneckenrad und Ausgleichselement. Somit können Schneckenräder mit radial größerem Kunststoffanteil verwendet werden, was die Kosten und das Gewicht senken, und die Belastbarkeit des Schneckenrades gleichzeitig steigern kann.

In einer bevorzugten Ausführungsform ist der Innendurchmesser des Schneckenrades kleiner als die Hälfte seines Außendurchmessers.

Während bei herkömmlichen Konstruktionen ein Verzahnungsspiel oder Ausfederweg vorgehalten werden muss, damit das Getriebe bei höheren Temperaturen und Quellung aufgrund von Luftfeuchte nicht klemmen kann, ist bei der erfinderischen Vorrichtung das Verzahnungsspiel oder der Ausfederweg in allen Temperatur- und Feuchtesituationen konstant klein, wodurch die Eingriffstiefe der Verzahnung konstant größer erhalten bleibt und damit die Zahnbelastung geringer wird. Dadurch kann eine besonders feine Abstimmung des Abstandes zwischen dem Schneckenrad und der Schneckenwelle realisiert werden.

Das Ausgleichselement kann einstückig mit dem Getriebegehäuse oder mit einem Teil des Getriebegehäuses ausgebildet sein. Dies hat den Vorteil, dass es unverlierbar am Gehäuse befestigt ist, wodurch sich hierdurch die Anzahl der Einzelteile der Getriebeanordnung verringert.

In einer erfinderischen Ausführungsform ist die Halterung eine rohrförmig ausgebildete Schneckenführung, in welcher die Schneckenwelle axial geführt angeordnet ist, wobei das motorferne Ende der Schneckenwelle in der rohrförmig ausgebildeten Schneckenführung, vorzugsweise in einem Loslager, beispielsweise einem Wälzlager, das drehfest in der Schneckenführung angeordnet ist, drehbar gelagert sein kann.

Das Ausgleichselement ist in dieser Ausführungsform vorteilhafterweise mit der rohrförmig ausgebildeten Schneckenführung verbunden, welche die Halterung bildet. Dies hat einerseits den Vorteil, dass der als Aufnahme ausgebildete vordere Endabschnitt des Ausgleichselementes durch die Drehung der Schneckenverzahnung keine zusätzliche, einen möglichen Verschleiß erhöhende Belastung erfährt, andererseits wird, insbesondere, wenn das motorferne Ende der Schneckenverzahnung in einem Wälzlager, beziehungsweise einem Loslager, drehbar aufgenommen ist und dieses Loslager in der rohrförmig ausgebildeten Schneckenführung befestigt ist, eine stabilere Umsetzung der Bewegung von der Schneckenverzahnung auf die Schneckenwelle erreicht.

Eine erfinderische Ausführungsform sieht vor, dass das Getriebegehäuse zweiteilig ausgebildet ist, wobei in dem einen Teil das Schneckenrad drehbar gelagert aufgenommen ist und der andere Teil die Halterung ist, in der die Schneckenwelle drehbar gelagert aufgenommen ist. Das Ausgleichselement kann in diesem Fall außen am Getriebegehäuse befestigt werden und den einen Teil des Getriebegehäuses mit dem anderen Teil des Getriebegehäuses, beispielsweise über Befestigungselemente, die an dem einen und an dem anderen Teil angeordnet sind, verbinden. Schneckenrad und Schneckenwelle sind in den beiden Gehäuseteilen dabei so angeordnet, dass, wenn die beiden Gehäuseteile miteinander verbunden werden, beispielsweise über das oder die Ausgleichselemente, die Schneckenverzahnung der Schneckenwelle so zwischen die Zähne des Schneckenrades greift, dass eine Wirkverbindung zwischen dem Schneckenrad und der Schneckenwelle hergestellt wird.

Bei dieser Ausführungsform ist vorteilhafterweise der eine Teil mit dem anderen Teil bereits über ein Scharnier schwenkbar so verbunden, dass zum Herstellen der Wirkverbindung zwischen dem Schneckenrad und der Schneckenwelle die Schneckenwelle gegen das Schneckenrad geschwenkt werden kann.

Der Teil des Getriebegehäuses, in dem das Schneckenrad drehbar gelagert aufgenommen ist, besteht vorzugsweise aus Kunststoff. Er kann dabei aus dem gleichen Material wie das Schneckenrad oder wie Teile des Schneckenrads bestehen, beispielsweise aus einem Matrixmaterial, das vorzugsweise eine Faserverstärkung aufweist. Kunststoff ist, verglichen mit einem Metall, sehr leicht, so dass bei einem derartigen Gehäuse eine weitere Reduzierung des Gesamtgewichtes der Vorrichtung erreicht werden kann. Da das Ausgleichselement die Kompensation realisiert, kann ein derartiges Gehäuse natürlich auch aus einem anderen Kunststoff sein.

Der andere Teil des Getriebegehäuses kann, sofern eine noch weitere Gewichtsreduktion gewünscht wird, ebenfalls aus Kunststoff bestehen. Er besteht jedoch vorzugsweise aus Metall und besonders vorzugsweise aus Aluminium. Auf diese Weise können der Motor und die Schneckenwelle leichter gekühlt werden, da Metall im Allgemeinen die Wärme besser abführt als Kunststoff. Bei einem zweiteilig oder zweistückig ausgebildeten Gehäuse kann der eine Teil des Getriebegehäuses mit dem hinteren Endabschnitt des Ausgleichselementes verbunden werden, der andere Teil des Getriebegehäuses kann mit dem vorderen Endabschnitt des Ausgleichselementes, beispielsweise vernietet oder lösbar, so verbunden werden, dass die Schneckenverzahnung zwischen die Zähne des Schneckenrades eingreift, wenn die beiden Gehäuseteile geschlossen sind. Sind die beiden Getriebegehäuseteile schwenkbar mittels eines Kunststoffausgleichselementes miteinander verbunden, fluchtet die Motorachse immer mit der Schneckenachse. Damit ist eine einfachere Kupplung zwischen Schneckenrad und Schneckenwelle möglich, die Schneckenwelle kann sogar einstückig mit der Motorwelle ausgebildet werden.

In einer einfachen Variation der erfinderischen Vorrichtung ist das Ausgleichselement mit dem Getriebegehäuse über ein erstes Verbindungsmittel, beispielsweise eine Hülse, und über ein zweites Verbindungsmittel, beispielsweise einen Zapfen, verbunden, die wobei die beiden Verbindungsmittel so ineinander greifen, dass das Ausgleichselement, welches schwenkbar sein kann, an dem Getriebegehäuse befestigt ist, wobei entweder das Getriebegehäuse das zweite Verbindungsmittel und der hintere Endabschnitt das erste Verbindungsmittel aufweist oder der hintere Endabschnitt das zweite Verbindungsmittel und das Getriebegehäuse das erste Verbindungsmittel aufweist. Das Ausgleichselement kann in diesem Fall besonders einfach an dem Getriebegehäuse befestigt werden und an seinem vorderen Endabschnitt das motorferne Ende der Schneckenwelle entweder direkt aufnehmen oder, wenn das motorferne Ende der Schneckenwelle in ein Loslager, beispielsweise ein Wälzlager, geführt ist, dieses Loslager, das dann die Halterung bildet, direkt aufnehmen.

Die Verbindungsmittel, die das Ausgleichselement mit dem Getriebegehäuse verbinden, sind vorteilhafterweise in einem festen Abstand und in einer festen Richtung zur Lenkachse angeordnet, sobald das Ausgleichselement mit dem Getriebegehäuse verbunden ist.

Vorteilhafterweise weist das Getriebegehäuse ein, vorzugsweise als Wälzlager ausgebildetes, Festlager auf, in welchem das motorseitige Ende der Schneckenwelle aufgenommen ist, wobei das Festlager schwenkbar ausgebildet sein kann. Dies hat den Vorteil, dass das Lager durch Verkippen nicht schwergängig läuft.

Die Vorrichtung kann, wie dies beispielsweise bei elektromechanischen Servolenkungen der Fall ist, einen Antriebsmotor aufweisen, der die Schneckenwelle an ihrem motorseitigen Ende antreibt. Die Schneckenwelle kann an ihrem motorseitigen Ende in einem, beispielsweise als Wälzlager ausgebildeten, Festlager geführt sein.

Das Getriebegehäuse kann darüber hinaus wenigstens noch ein weiteres, vorzugsweise als Wälzlager ausgebildetes, Festlager aufweisen, in welchem die Lenkwelle drehbar aufgenommen ist. Vorteilhafterweise weist das Getriebegehäuse jedoch zwei solche weiteren Festlager auf, zwischen denen dann das Schneckenrad angeordnet ist.

Damit die Schneckenwelle stabil drehbar in dem Getriebegehäuse geführt ist, ist an ihrem motorfernen Ende ein, vorzugsweise als Wälzlager ausgebildetes Loslager angeordnet, in welchem die Schneckenwelle drehbar geführt wird.

An ihrem motorseitigen Ende weist die Schneckenwelle vorzugsweise den Antriebsmotor auf, der die Schneckenwelle an ihrem motorseitigen Ende antreibt.

Bei herkömmlichen Konstruktionen wird teilweise eine Anfederung der Schneckenwelle gegen das Schneckenrad realisiert, um das Verzahnungsspiel zumindest bei kleinen Drehmomenten zu reduzieren. Bei mittleren bis großen Momenten überwinden die Verzahnungskräfte die Anfederkräfte und drücken die Schneckenwelle aus dem Eingriff heraus gegen einen möglichen Endanschlag, bei dem die Eingriffstiefe spürbar sinkt und die Zahnbelastung des Schneckenrads somit ansteigt.

Um derartige Effekte zu vermeiden kann zusätzlich in das Ausgleichselement konstruktiv eine Federwirkung eingearbeitet werden, die jedoch nur sehr kleine Federwege bereitstellen muss, da der Hauptteil der Ausgleichsbewegung durch die thermische Wärmedehnung und Quellung des Ausgleichselements kompensiert wird. Auf diese Weise kann auch ein einfaches herkömmliches Festlager für die Schnecke verwendet werden, wenn diese nicht schwenken muss, sondern im Ausgleichselement entsprechend geführt und in der Schneckenachse ausgerichtet geführt werden kann. Um in dem Ausgleichselement eine Federwirkung vorzusehen, kann dieses beispielsweise zusätzlich über eine Feder mit dem Gehäuse verbunden sein. Das Ausgleichselement könnte auch mehrstückig ausgebildet sein, wobei zwischen zwei benachbarten Stücken oder an einem der beiden Endabschnitte beispielsweise ebenfalls ein elastisches Element oder ein Federelement vorgesehen werden könnte.

Die in der nachfolgenden Beschreibung verwendeten Bezeichnungen wie oben, unten, links, rechts und ähnliches beziehen sich auf Ausführungsbeispiele und sollen in keiner Weise einschränkend sein, auch dann nicht, wenn sie sich auf bevorzugte Ausführungsformen beziehen.

Die Erfindung wird nachfolgend anhand von Zeichnungen näher erläutert. Es zeigen:

Fig. 1    ein erstes Ausführungsbeispiel einer erfinderischen Getriebeanordnung,

Fig. 2    eine Explosionsdarstellung des ersten Ausführungsbeispiels,

Fig. 3    mehrere Ansichten eines erfinderischen Ausgleichselements,

Fig. 4    ein zweites Beispiel der erfinderischen Getriebeanordnung,

Fig. 5    eine Explosionsdarstellung des zweiten Ausführungsbeispiels,

Fig. 6    eine Schneckenführung,

Fig. 7    ein drittes Beispiel der erfinderischen Getriebeanordnung,

Fig. 8    eine Ansicht der Einzelteile der erfinderischen Getriebeanordnung des dritten Ausführungsbeispiels.

Fig. 9    eine schematische Darstellung eines Schneckengetriebes

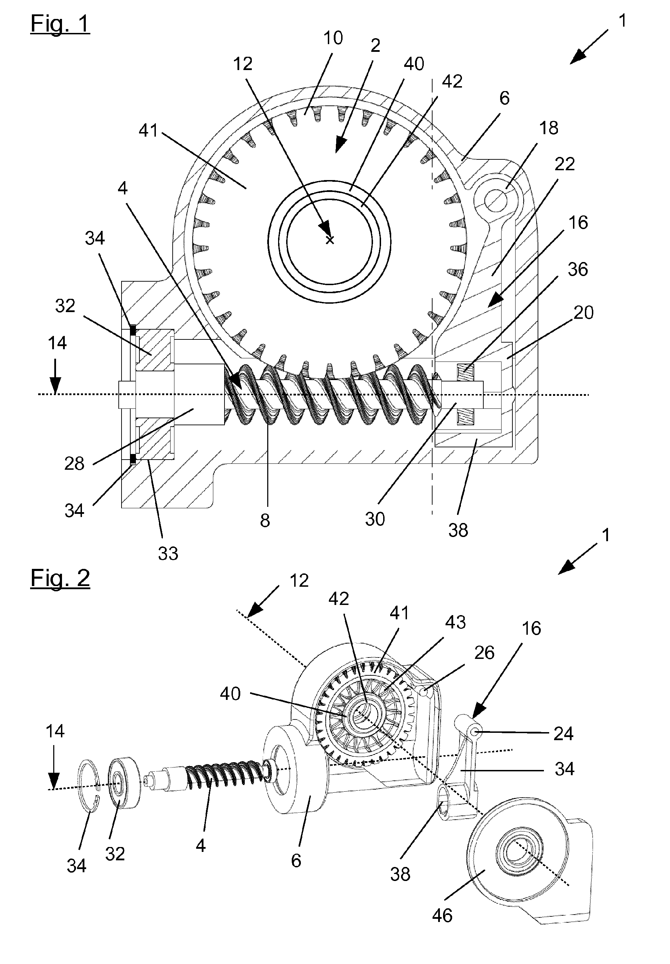

Figur 1 zeigt eine erfinderische Vorrichtung 1 in Form eines Schneckengetriebes, beispielsweise einer elektromechanischen Servolenkung, mit einem Schneckenrad 2, einer Schneckenwelle 4, und einem Getriebegehäuse 6. Die Schneckenwelle 4 weist eine Schneckenverzahnung 8 auf, die zwischen Zähne 10 des Schneckenrads 2 eingreift und das Schneckenrad 2 um eine Lenkachse 12 dreht, wenn sich die Schneckenwelle 4 um ihre Drehachse 14 dreht. Im Inneren des Getriebegehäuses 6 ist ein Ausgleichselement 16 angeordnet, das einen hinteren Endabschnitt 18, einen vorderen Endabschnitt 20 sowie einen zwischen dem hinteren Endabschnitt 18 und dem vorderen Endabschnitt 20 angeordneten Mittelabschnitt 22 aufweist. Der hintere Endabschnitt 18 des Ausgleichselements 16 ist als Hülse 24 ausgebildet und an einem Zapfen 26 des Getriebegehäuses 6 schwenkbar befestigt, wie aus Figur 2 hervorgeht. Die Schneckenwelle 4 weist ein motorseitiges Ende 28 und ein motorfernes Ende 30 auf. Zwischen dem motorseitigen Ende 28 und dem motorfernen Ende 30 erstreckt sich der Bereich der Schneckenverzahnung 8 der Schneckenwelle 4. An dem motorseitigen Ende 28 ist ein Festlager 32 ausgebildet, das im vorliegenden Fall ein Wälzlager ist. Das Festlager 32 kann schwenkbar ausgebildet sein. Es ist fest in der Festlageraufnahme 33 des Getriebegehäuses 6 mit Verankerungselementen 34 verankert. An dem motorfernen Ende 30 der Schneckenwelle 4 ist ein, vorzugsweise als Wälzlager ausgebildetes Loslager 36 angeordnet, in welchem die Schneckenwelle 4 drehbar aufgenommen ist. Der vordere Endabschnitt 20 des Ausgleichselements 16 ist als eine Aufnahme 38 für das Loslager 36 ausgebildet. Das Loslager 36 ist in dieser Aufnahme 38 des Ausgleichselements 16 zentriert und drehfest aufgenommen. Die Schneckenwelle 4 wird durch diese Aufnahme 38 zentriert und mit einem vorgegebenen Anpressdruck gegen das Schneckenrad 2 gepresst.
Das Schneckenrad 2 weist in diesem Ausführungsbeispiel einen um einen Mittelteil 40 angeordneten Zahnkranz 41 auf, der drehfest auf dem Mittelteil 40 sitzt. Der Mittelteil 40 ist als Kunststoffring ausgebildet, welcher drehfest auf einer Metallnabe 42 sitzt, die fest mit einer Lenkwelle (nicht dargestellt) verbunden ist und die Lenkwelle umgreift, wobei die Lenkwelle um die Lenkachse 12, die sich mittig axial durch die Lenkwelle erstreckt, drehbar ist. Natürlich könnte der Zahnkranz 41 auch direkt auf der Metallnabe sitzen und darauf drehfest angeordnet sein.
Figur 2 zeigt die einzelnen Bestandteile einer beispielhaften Vorrichtung 1 in einer perspektivischen Ansicht. Das Verankerungselement 34 ist in diesem Ausführungsbeispiel als Sprengring ausgebildet, das Festlager 32, welches die Schneckenwelle 4 drehbar gelagert aufnimmt, wird drehfest in die Festlageraufnahme 33 des Getriebegehäuses 6 eingeklemmt. Das Schneckenrad 2 ist drehbar um die Lenkachse 12 in dem Getriebegehäuse 6 angeordnet. Das Mittelteil 40 muss nicht, wie in Figur 1 dargestellt, als Kunststoffring ausgeführt sein, sondern kann beispielsweise auch als ein zwischen dem Zahnkranz 41 und der Metallnabe 42 angeordnetes Radelement 43 ausgebildet sein, auf welchem der Zahnkranz 41 drehfest befestigt ist.
Das Radelement 43 und der Zahnkranz 41 sind vorliegend aus unterschiedlichen Materialien. Beispielsweise kann das Radelement 43 aus glasfaserverstärktem Kunststoff sein, während der Zahnkranz 41 aus nicht glasfaserverstärktem Kunststoff ist.
Das Schneckenrad 2 kann beispielsweise auch einstückig ausgebildet sein, und aus einem einzigen Material, vorzugsweise glasfaserverstärktem Kunststoff bestehen. Es kann auch zweistückig ausgebildet sein, wobei es in diesem Fall beispielsweise aus einer Nabe aus Metall, und einem Zahnkranz, zum Beispiel aus nichtglasfaserverstärktem Kunststoff bestehen kann.
Das Ausgleichselement 16 weist an seinem hinteren Endabschnitt 18 die Hülse 24 auf, die in vorliegenden Ausführungsbeispiel über einen Steg 44 mit der Aufnahme 38 verbunden ist. Der Steg 44 stabilisiert das Ausgleichselement 16, sodass zwischen der Hülse 24 und der Aufnahme 38 keine Torsionen stattfinden.
Die Hülse 24 des Ausgleichselements 16 ist im dargestellten Ausführungsbeispiel schwenkbar mit dem Zapfen 26 des Getriebegehäuses 6 verbunden. Ein Gehäusedeckel 46, der auf dem Getriebegehäuse 6 angeordnet wird, schützt die Vorrichtung 1 vor Staub und Schmutz.

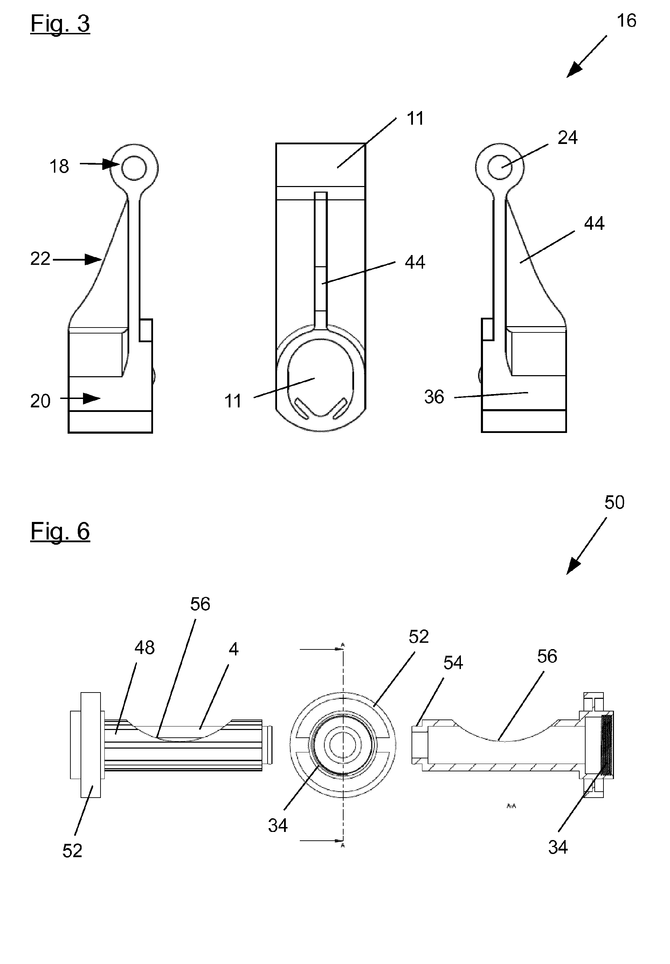

Figur 3 zeigt drei seitliche Ansichten des Ausgleichselements 16. Das Ausgleichselement 16 weist den hinteren Endabschnitt 18, den mit dem hinteren Endabschnitt 18 verbundenen Mittelabschnitt 22 und den mit dem Mittelabschnitt 22 verbundenen vorderen Endabschnitt 20 auf. Der hintere Endabschnitt 18 ist einstückig mit der Hülse 24 verbunden oder als Hülse 24 ausgebildet. Die Hülse 24 verbindet das Ausgleichselement 16 mit dem Getriebegehäuse 6.

Die Loslageraufnahme 38 des vorderen Endabschnitts 20 des Ausgleichselements 16 nimmt das Loslager 36 der Schneckenwelle 4 drehfest auf. Der Mittelabschnitt 22 des Ausgleichselements 16 weist den Steg 44 auf, der die Loslageraufnahme 38 und die Hülse 24 gegeneinander stabilisiert.

Das Ausgleichselement 16 ist passend dimensioniert und so ausgewählt, dass es, wenn sich auf Grund thermischer Schwankungen und/oder auf Grund von Feuchtigkeitsschwankungen das Schneckenrad 2 ausdehnt, dieser Ausdehnung in dem gleichen Maße folgt, sodass die Schneckenverzahnung 8 der Schneckenwelle 4 auch weiterhin mit dem nahezu gleichen Druck zwischen die Zähne 10 des Schneckenrads 2 greift, da die Schneckenwelle 4 der Ausdehnung des Schneckenrads 2 durch Ausweichen am motorfernen Ende 30 folgen kann.

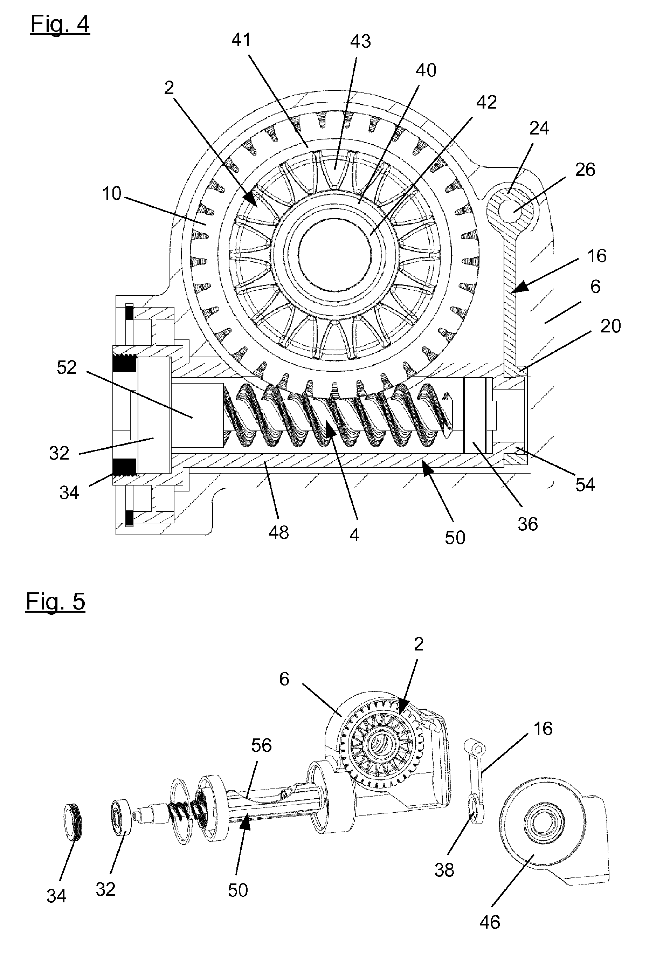

Figur 4 zeigt ein zweites Ausführungsbeispiel des Schneckengetriebes 1. Auf der fest um die und auf der Lenkwelle angeordneten Metallnabe 42 ist das Schneckenrad 2 drehfest angebracht, welches in diesem Ausführungsbeispiel mehrteilig, beispielsweise zweiteilig ausgeführt sein kann und einen Zahnkranz 41 aufweist, der drehfest auf einem Radelement 43 angeordnet ist. Alternativ kann das Schneckenrad 2 natürlich auch dreiteilig ausgeführt sein, wobei der Zahnkranz 41 dann beispielsweise zwischen zwei Radelementen 43 geklemmt aufgenommen ist. Die Schneckenwelle 4 ist in dem Ausführungsbeispiel gemäß Figur 4 in einem Führungsrohr 48 einer Schneckenführung 50 gelagert geführt angeordnet. Das Loslager 36 ist ebenfalls in dem Führungsrohr 48 drehfest angeordnet und nimmt das motorferne Ende 30 der Schneckenwelle 4 drehbar auf.

Die Schneckenführung 50 weist am motorseitigen Ende 28 ein motorseitiges Fußteil 52 auf, in welchem, wie der Figur 5 zu entnehmen ist, das Festlager 32 aufgenommen ist. Das Festlager 32 ist über ein als Schraubring ausgebildetes Verankerungselement 34 an das vordere Ende des motorseitigen Fußteils 52 geklemmt und so drehfest in der Schneckenführung 50 aufgenommen.

Die dem motorseitigen Fußteil 52 gegenüberliegendes Seite der Schneckenführung 50 weist ein Endstück 54 auf, das abgesetzt mit einem etwas kleineren Durchmesser als das Führungsrohr 48 auf dem Führungsrohr 48 angeordnet ist. Dieses Endstück 54 wird in den vorderen Endabschnitt 20 des Ausgleichselements 16 aufgenommen und stabilisiert so die Lage der Schneckenführung 50 realtiv zu dem Schneckenrad 2 in dem Gehäuse 6.

Die Schneckenführung 50 weist eine Mantelflächenausnehmung 56 auf, so dass die Zähne 10 des Schneckenrads 2 in Eingriff mit der Schneckenverzahnung 8 der Schneckenwelle 4 kommen können. Der in Figur 5 dargestellte Gehäusedeckel 46 dient wieder dem Schutz der Vorrichtung 1 gegen Staub und Schmutz.

Figur 6 zeigt das Schneckenführungsteil 50 in einer seitlichen Draufsicht (links), in einer Draufsicht auf das motorseitige Fußteil 52 (mittig) und in einer seitlichen Schnittdarstellung (rechts). Das Führungsrohr 48 der Schneckenführung 50 ist zylinderförmig aufgebaut und weist eine Mantelflächenausnehmung 56 auf, damit das Schneckenrad 2 in Eingriff mit der Schneckenwelle 4 gebracht werden kann. Das motorseitige Fußteil 52 ist mit dem Führungsrohr 48 verbunden oder einstückig mit diesem ausgebildet. Der Schraubring 34 in dem motorseitigen Fußteil 52 presst das Festlager 32 gegen den Anschlag des Fußteils 52 und befestigt damit das Festlager 32 drehfest in dem Fußteil 52 der Schneckenführung 50.

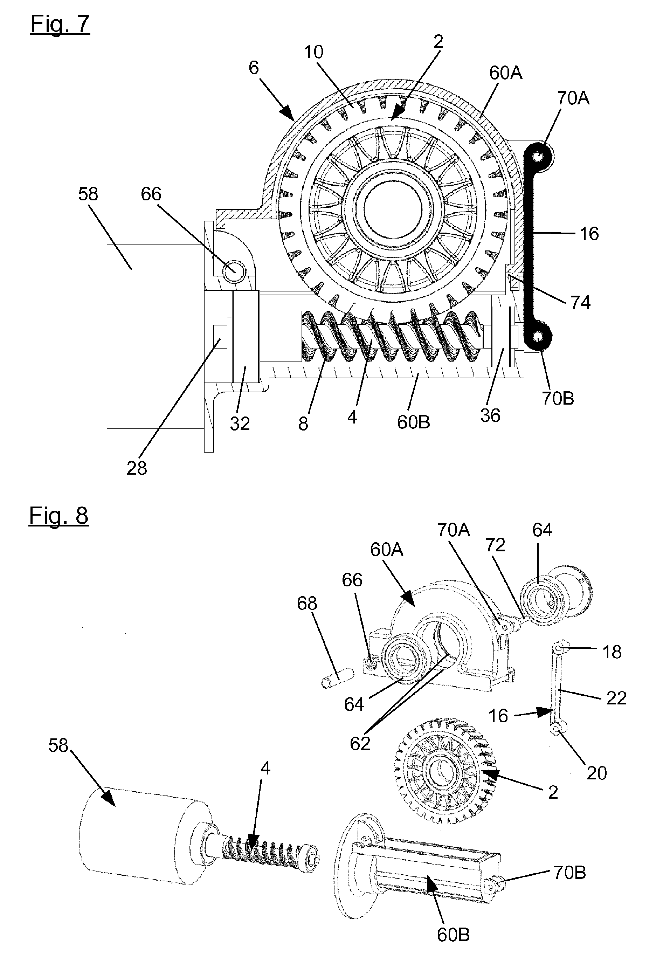

Die Figuren 7 und 8 zeigen schließlich ein drittes Ausführungsbeispiel der erfinderischen Vorrichtung. In diesem Ausführungsbeispiel ist ein Antriebsmotor 58 schematisch dargestellt, der mit dem motorseitigen Ende 28 der Schneckenwelle 4 in Eingriff steht und die Schneckenwelle 4 antreibt.

Das Getriebegehäuse 6 ist in dieser Ausführungsform zweiteilig aufgebaut. Der eine Teil des Getriebegehäuses 60a weist zwei Festlageraufnahmen 62 auf, in welchen jeweils ein, vorzugsweise als Wälzlager ausgebildetes weiteres Festlager 64 drehfest aufgenommen und mit dem Gehäuse drehfest verbunden ist. Die Lenkwelle ist in diesen beiden weiteren Festlagern 64 drehbar um die Lenkachse 12 angeordnet aufgenommen.

Zwischen den beiden weiteren Festlagern 64 ist in dem einen Teil des Gehäuses 60a das Schneckenrad 2 drehbar um die Lenkachse 12 und drehfest mit der Lenkwelle verbunden aufgenommen.

Die Schneckenwelle 4 ist in dem anderen Teil des Gehäuses 60b aufgenommen, und an ihrem motorseitigen Ende 28, sowie an ihrem motorfernen Ende 30 in jeweils einem Wälzlager 32, 36 geführt. Die beiden Getriebegehäusehälften 60a, 60b sind miteinander über ein Scharnier 66 und einen gemeinsamen Scharniersplint 68 verbunden. Der eine Teil des Gehäuses 60a weist ein Befestigungsmittel 70a auf, an welchem, beispielsweise mit Hilfe eines Splints 72, das Ausgleichselement 16 befestigt werden kann. Der andere Teil des Gehäuses 60b weist ein weiteres Befestigungsmittel 70b auf, welches ebenfalls mit dem Ausgleichselement 16 mittels eines Splints verbunden werden kann, wenn die beiden Gehäuseteile 60a, 60b gegeneinander geschwenkt und geschlossen sind.

Damit das Ausgleichselement 16 mit sich ändernden Temperaturen und mit sich ändernder Feuchtigkeit den Ausdehnungsbewegungen des Schneckenrads 2 und der Schneckenwelle 4 folgen kann, muss zwischen den beiden Gehäuseteilen 60a, 60b ein Spalt 74 verbleiben.

Dehnen sich beispielsweise mit zunehmender Temperatur das Schneckenrad 2 und die Schneckenwelle 4 aus, und/oder quillt auf Grund höherer Feuchtigkeit das Schneckenrad 2 und dehnt sich dabei aus, so vergrößert sich der Spalt 74, weil das Ausgleichselement 16 diesen Ausdehnungsbewegungen folgt, da es zumindest teilweise aus dem gleichen oder aus einem ähnlichen Material, beispielsweise Kunststoff, der vorzugsweise glasfaserverstärkt ist, besteht, wie das Schneckenrad 2.

Verringert sich hingegen die Umgebungstemperatur, so wird der Spalt 74 kleiner, da das Ausgleichselement 16, das zwischen dem einen Teil des Gehäuses 60a und an dem anderen Teil des Gehäuses 60b angeordnet ist und die beiden Gehäuseteile miteinander verbindet die beiden Gehäuseteile gegeneinander drückt. Auf diese Weise kann das sogenannte Ausgleichselement 16 außen am Gehäuses vorgesehen werden und gleichzeitig eine Arretierung für die beiden Gehäuseteile 60a, 60b bilden. In beiden Fällen ist jedoch dafür gesorgt, dass, sofern Schneckenrad 2 und Ausgleichselement 16 ähnliche Ausdehnungs- und Quellkoeffizienten aufweisen, die Größe des Spaltes 74 sich so einstellt, dass ein ausreichendes Ausweichen oder Nachgeben der Schneckenwelle 4 gegen das Schneckenrad 2 gewährleistet ist, dass also einerseits keine Verkantung zwischen Schneckenrad 2 und Schneckenwelle 4 auftritt, andererseits temperatur- und feuchtigkeitsunabhängig immer ein hinreichender Eingriff der Schneckenwelle 4 in das Schneckenrad 2 erfolgt.

Die Erfindung wurde anhand dreier bevorzugter Ausführungsbeispiele erläutert, ohne auf diese Ausführungsbeispiele beschränkt zu sein. Die Merkmale einzelner Ausführungsbeispiele sind untereinander frei kombinierbar oder austauschbar, sofern Kompatibilität vorliegt. So ist beispielsweise ein Antriebsmotor 58 nicht notwendigerweise nur in dem dritten Ausführungsbeispiel vorgesehen, sondern kann auch im ersten und im zweiten Ausführungsbeispiel als antreibendes Element vorgesehen sein. In einer Ausführung, in welcher das Getriebegehäuse aus zwei Gehäuseteilen besteht, ist auch nicht erforderlich, dass eine Seite mit der anderen Seite über ein Scharnier 66 verbunden ist. Es ist auch denkbar, dass anstelle des Scharniers, welches die beiden Gehäuseteile 60a, 60b miteinander verbindet weitere Befestigungsmittel an jedem Gehäuseteil angeordnet sind, die beispielsweise über ein weiteres Ausgleichselement 16 miteinander verbunden sind. Vorrichtungen der hier beschriebenen Art werden oft als Teil von elektromechanischen Servolenkungen eingesetzt.

Bezugszeichenliste

| | |
|---|---|
| 1 | Vorrichtung, elektromechanische Servolenkung |
| 2 | Schneckenrad |
| 4 | Schneckenwelle |
| 6 | Getriebegehäuse |
| 8 | Schneckenverzahnung |
| 10 | Zähne |
| 12 | Lenkachse |
| 14 | Drehachse |
| 16 | Ausgleichselement |
| 18 | Hinterer Endabschnitt |
| 20 | Vorderer Endabschnitt |
| 22 | Mittelabschnitt |
| 24 | Hülse, erstes Verbindungsmittel |
| 26 | Zapfen, zweites Verbindungsmittel |
| 28 | Motorseitiges Ende |
| 30 | Motorfernes Ende |
| 32 | Festlager |
| 33 | Festlageraufnahme |
| 34 | Verankerungselemente, Sprengring, Schraubring |
| 36 | Loslager |
| 38 | Aufnahme, Loslageraufnahme |
| 40 | Mittelteil, ringförmige Gestalt des Radelements |
| 41 | Zahnkranz |
| 42 | Metallnabe |
| 43 | Radelement |
| 44 | Steg |
| 46 | Gehäusedeckel |
| 48 | Führungsrohr |
| 50 | Schneckenführung |

| | |
|---|---|
| 52 | Motorseitiges Fußteil |
| 54 | Endstück |
| 56 | Mantelflächenausnehmung |
| 58 | Antriebsmotor |
| 60a | einer Teil des Getriebegehäuses |
| 60b | anderer Teil des Getriebegehäuses |
| 62 | Festlageraufnahme |
| 64 | Weiteres Festlager |
| 66 | Scharnier |
| 68 | Scharniersplint |
| 70a, 70b | Befestigungsmittel |
| 72 | Splint |
| 74 | Spalt |

**Patentansprüche**

1. Vorrichtung (1), aufweisend

   - ein Zähne (10) aufweisendes Schneckenrad (2), das drehbar um eine Lenkachse (12) angeordnet ist und drehfest mit einer um die Lenkachse (12) drehbaren Lenkwelle verbindbar ist,
   - eine um eine Drehachse (14) drehbar gelagerte Schneckenwelle (4), die ein motorseitiges (28) und ein motorfernes Ende (30), sowie eine Schneckenverzahnung (8) aufweist, welche zwischen die Zähne (10) des Schneckenrades (2) so eingreift, dass, wenn die Schneckenwelle (4) sich um die Drehachse (14) dreht, das Schneckenrad (2) sich um die Lenkachse (12) dreht,
   - ein Getriebegehäuse (6, 60A, 60B), in welchem das Schneckenrad (2) und die Schneckenwelle (4) drehbar gelagert aufgenommen sind,
   - sowie ein Ausgleichselement (16),

   **dadurch gekennzeichnet, dass** das Ausgleichselement (16) einen Mittelabschnitt (22), sowie einen hinteren (18) und einen vorderen Endabschnitt (20) aufweist, wobei der hintere Endabschnitt (18) mit dem Getriebegehäuse (6, 6A) verbunden ist und der vordere Endabschnitt (20) das motorferne Ende (30) der Schneckenwelle (4) oder eine das motorferne Ende (30) der Schneckenwelle (4) aufnehmende Halterung haltert.

2. Vorrichtung (1) nach Anspruch 1,
   **dadurch gekennzeichnet, dass** die Halterung eine rohrförmig ausgebildete Schneckenführung (50) ist, in welcher die Schneckenwelle (4) axial geführt und axial drehbar aufgenommen ist, wobei das motorferne Ende (30) der Schneckenwelle (4) in der rohrförmig ausgebildeten Schneckenführung (50) drehbar gelagert ist.

3. Vorrichtung nach Anspruch 1,
   **dadurch gekennzeichnet, dass** die Halterung ein um das motorferne Ende (30) der Schneckenwelle (4) angeordnetes, vorzugsweise als Wälzlager ausgebildetes Loslager (36) ist, welches die Schneckenwelle (4) drehbar haltert.

4. Vorrichtung (1) nach Anspruch 1,
   **dadurch gekennzeichnet, dass** das Getriebegehäuse (60A, 60B) zweiteilig ausgebildet ist, wobei der eine Teil (60A) das Schneckenrad (2) drehbar gelagert aufnimmt und der andere Teil (60B) die Schneckenwelle (4) drehbar gelagert aufnimmt und die Halterung ist.

5. Vorrichtung (1) nach Anspruch 4,
   **dadurch gekennzeichnet, dass** der eine Teil (60A) mit dem anderen Teil (60B) über ein Scharnier (66) schwenkbar verbunden ist, wobei der eine Teil (60A) vorzugsweise aus Kunststoff besteht.

6. Vorrichtung (1) nach Anspruch 4, oder 5
   **dadurch gekennzeichnet, dass** der andere Teil (60B) aus Metall, vorzugsweise aus Aluminium besteht.

7. Vorrichtung (1) nach einem der Ansprüche 4 bis 6,
   **dadurch gekennzeichnet, dass** der eine Teil (60A) des Getriebegehäuses (6) mit dem hinteren Endabschnitt (18) des Ausgleichselements (16) verbunden ist und der anderen Teil (60B) des Getriebegehäuses (6) mit dem vorderen Endabschnitt (20) des Ausgleichselements (16) so verbunden ist, dass die Schneckenverzahnung (8) zwischen die Zähne (10) des Schneckenrads (2) eingreift.

8. Vorrichtung (1) nach einem der vorigen Ansprüche,
**dadurch gekennzeichnet, dass** das Ausgleichselement (16) einstückig mit dem oder einem Teil des Getriebegehäuses (6, 60A) ausgebildet ist.

9. Vorrichtung (1) nach einem der vorigen Ansprüche,
**dadurch gekennzeichnet, dass** der Innendurchmesser des Schneckenrads (2) kleiner ist als die Hälfte seines Außendurchmessers.

10. Vorrichtung (1) nach einem der vorigen Ansprüche,
**dadurch gekennzeichnet, dass** das Schneckenrad (2) aus glasfaserverstärktem Kunststoffmaterial ist, oder einen Zahnkranz (41) aus glasfaserverstärktem Kunststoffmaterial aufweist, oder ein Radelement (43) aus glasfaserverstärktem Kunststoffmaterial aufweist.

11. Vorrichtung (1) nach einem der vorigen Ansprüche,
**dadurch gekennzeichnet, dass** das Schneckenrad eine Stahlnabe aufweist, deren Durchmesser gleich oder größer dem halben Durchmesser des Schneckenrads ist, wobei der Durchmesser bevorzugt größer als dreiviertel mal der Durchmesser des Schneckenrades ist, wobei der Zahnkranz ohne Glasfaserverstärkung ausgebildet sein kann.

12. Vorrichtung (1) nach einem der vorigen Ansprüche,
**dadurch gekennzeichnet, dass** das Ausgleichselement (16) aus Polymer oder Kunststoff gebildet ist, wobei es vorzugsweise aus Polyamid, besonders vorzugsweise ausglasfaserverstärktem Polyamid gebildet ist.

13. Vorrichtung (1) nach einem der vorigen Ansprüche,
**dadurch gekennzeichnet, dass** das Ausgleichselement (16) mit dem Getriebegehäuse (6, 60A, 60B) über ein erstes Verbindungsmittel (24) und ein zweites Verbindungsmittel (26) verbunden ist, wobei die Verbindungsmittel (24, 26) so ineinander greifen, dass das Ausgleichselement (16), vorzugsweise schwenkbar, an dem Getriebegehäuse (6, 60A, 60B) befestigt ist, wobei entweder das Getriebegehäuse (6, 60A) das zweite Verbindungsmittel (26) und der hintere Endabschnitt (18) das erste Verbindungsmittel (24) aufweist, oder der hintere Endabschnitt (18) das zweite Verbindungsmittel (26) und das Getriebegehäuse (6, 60A) das erste Verbindungsmittel (24) aufweist, wobei beispielsweise das erste Verbindungsmittel (24) eine Hülse (24) und das zweite Verbindungsmittel (26) ein Zapfen ist.

14. Vorrichtung (1) nach Anspruch 13,
**dadurch gekennzeichnet, dass** die Verbindungsmittel (24, 26) in einem festen Abstand und in einer festen Richtung zur Lenkachse (12) angeordnet sind, wenn das Ausgleichselement(16) mit dem Getriebegehäuse (6, 60A, 60B) verbunden ist.

15. Vorrichtung (1) nach einem der vorigen Ansprüche,
**dadurch gekennzeichnet, dass** das Getriebegehäuse (6, 60A) ein, vorzugsweise als Wälzlager ausgebildetes, Festlager (32) aufweist, in welchem das motorseitige Ende (28) der Schneckenwelle (4) aufgenommen ist, wobei das Festlager (32) schwenkbar ausgebildet sein kann.

16. Vorrichtung (1) nach einem der vorigen Ansprüche,
**dadurch gekennzeichnet, dass** das Getriebegehäuse (6, 60A) wenigstens ein weiteres, vorzugsweise als Wälzlager ausgebildetes, Festlager (64) aufweist, in dem die Lenkwelle drehbar aufgenommen werden kann.

17. Vorrichtung (1) nach einem der vorigen Ansprüche, aufweisend einen Antriebsmotor (58), der die Schneckenwelle (4) an ihrem motorseitigen Ende (28) antreibt.

18. Elektromechanische Servolenkung, aufweisend eine Vorrichtung (1) nach einem der vorigen Ansprüche.

Fig. 1

Fig. 2

Fig. 3

16

18

11

24

22

44

44

20

11

36

Fig. 6

50

56

48

4

52

54

56

52

34

34

Fig. 4

Fig. 5

Fig. 7

Fig. 8

## Fig. 9

**Europäisches Patentamt**
**European Patent Office**
**Office européen des brevets**

# EUROPÄISCHER RECHERCHENBERICHT

Nummer der Anmeldung

EP 15 15 4984

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 99/11502 A1 (LUCAS IND PLC [GB]; APPLEYARD MICHAEL [GB]) 11. März 1999 (1999-03-11) | 1-7,9, 10, 13-15,18 | INV. F16H57/021 F16H57/022 |
| Y | * Abbildungen 1,3 * | 12 | |
| X | DE 10 2013 007883 A1 (THYSSENKRUPP PRESTA AG [LI]) 13. November 2014 (2014-11-13) * Abbildung 4 * | 1-4,6,7, 11, 13-15, 17,18 | |
| X | EP 2 497 975 A1 (SKF AB [SE]) 12. September 2012 (2012-09-12) * Abbildung 4 * | 1-15,18 | |
| X | EP 2 492 167 A1 (SHOWA CORP [JP]) 29. August 2012 (2012-08-29) * Abbildungen 3,5 * | 1-4,6,9, 13-15, 17,18 | |
| Y | US 2011/067946 A1 (KIM TAE SIK [KR]) 24. März 2011 (2011-03-24) * Anspruch 4 * | 12 | |

RECHERCHIERTE SACHGEBIETE (IPC)

F16H

Der vorliegende Recherchenbericht wurde für alle Patentansprüche erstellt

| Recherchenort | Abschlußdatum der Recherche | Prüfer |
|---|---|---|
| München | 29. Juni 2015 | Hassiotis, Vasilis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                  

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 4984

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2015

| Im Recherchenbericht angeführtes Patentdokument | Datum der Veröffentlichung | Mitglied(er) der Patentfamilie | Datum der Veröffentlichung |
|---|---|---|---|
| WO 9911502 A1 | 11-03-1999 | BR 9812044 A<br>DE 69833768 T2<br>EP 1007398 A1<br>EP 1676768 A1<br>ES 2260844 T3<br>JP 2001514122 A<br>US 6357313 B1<br>WO 9911502 A1 | 03-10-2000<br>16-11-2006<br>14-06-2000<br>05-07-2006<br>01-11-2006<br>11-09-2001<br>19-03-2002<br>11-03-1999 |
| DE 102013007883 A1 | 13-11-2014 | DE 102013007883 A1<br>WO 2014180736 A1 | 13-11-2014<br>13-11-2014 |
| EP 2497975 A1 | 12-09-2012 | CN 102678883 A<br>EP 2497975 A1<br>FR 2972514 A1<br>US 2012227526 A1 | 19-09-2012<br>12-09-2012<br>14-09-2012<br>13-09-2012 |
| EP 2492167 A1 | 29-08-2012 | CN 102649445 A<br>EP 2492167 A1<br>EP 2578470 A1<br>US 2012217085 A1 | 29-08-2012<br>29-08-2012<br>10-04-2013<br>30-08-2012 |
| US 2011067946 A1 | 24-03-2011 | CN 102030032 A<br>US 2011067946 A1 | 27-04-2011<br>24-03-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2694355 A1